# EUROPÄISCHE PATENTSCHRIFT

(11) **EP 3 390 113 B1**
(45) Veröffentlichungstag und Bekanntmachung des Hinweises auf die Patenterteilung: **26.02.2020**
(21) Anmeldenummer: 16781101.7
(22) Anmeldetag: 11.10.2016
(51) Int. Cl.: B60C 13/00

(54) **FAHRZEUGREIFEN**
VEHICLE TYRE
PNEUMATIQUE DE VEHICULE

(30) Priorität: 16.12.2015 DE 102015225419
(43) Veröffentlichungstag der Anmeldung: 24.10.2018
(73) Patentinhaber: Continental Reifen Deutschland GmbH, 30165 Hannover (DE)
(72) Erfinder: BEHR, Ulrich, 30167 Hannover (DE)
(74) Vertreter: Finger, Karsten
(86) Internationale Anmeldenummer: PCT/EP2016/074285
(87) Internationale Veröffentlichungsnummer: WO 2017/102129

(56) Entgegenhaltungen:
- WO-A1-2014/005784
- DE-A1-102012 104 890
- JP-A- 2011 126 335

## Beschreibung

### Fahrzeugreifen

Die Erfindung betrifft einen Fahrzeugreifen mit einer dekorativen Seitenwandschraffur aus einer Vielzahl von geradlinig verlaufenden Erhebungen, die auf Schraffurflächen, die Schraffurelemente bilden, ausgebildet sind, wobei die Schraffurelemente gleichartige regelmäßige oder unregelmäßige n-Ecke mit n von vier bis sechs sind und mit gemeinsamen äußeren Elementseiten unmittelbar aneinander anschließen,
wobei die Anzahl der Erhebungen in sämtlichen Schraffurflächen gleich ist und wobei an gemeinsamen Elementseiten von Schraffurelementen die Erhebungen aus den betreffenden Schraffurflächen unmittelbar aufeinander stoßen.

Seitenwandschraffuren als gestalterische Maßnahmen auf Seitenwänden von Fahrzeugreifen sind bekannt, weit verbreitet und waren immer wieder Gegenstand von Patentanmeldungen und Patenten.

Ein Fahrzeugreifen der eingangs genannten Art ist beispielsweise aus der DE 10 2012 104 890 A1 bekannt. Die Seitenwandschraffur dieses Fahrzeugreifens weist Schraffurelemente mit vier Ecken und gemeinsamen Elementseiten auf. In einem Überlappungsbereich, welcher wenigstens zwei Teilbereiche von aneinander angrenzenden Schraffurelementen mit in unterschiedlicher Richtung orientierten Erhebungen umfasst, weisen die zwischen den Erhebungen der Seitenwandschraffur befindlichen Vertiefungen eine andere Tiefe als die außerhalb des Überlappungsbereiches zwischen den Erhebungen der Seitenwandschraffur befindlichen Vertiefungen auf.

Aus der DE 10 2013 108 786 A1 ist ein Fahrzeugreifen mit einer Seitenwandschraffur bekannt, welche eine Basisschraffur aus einer Vielzahl von nebeneinander, insbesondere parallel zueinander, verlaufenden Erhebungen aufweist, wobei die Erhebungen aus der Basisschraffur unter übereinstimmend großen Winkeln abgelenkte Abschnitte aufweisen, die zumindest eine örtlich begrenzte Schraffurfläche bilden. Die abgelenkten Abschnitte gehen durch nochmaliges, unter übereinstimmend großen Winkeln erfolgtes Ablenken in zumindest eine weitere Schraffurfläche über. Auf diese Weise können Schraffurflächen gebildet werden, die Mantelflächen geometrischer Körper, beispielsweise Pyramidenflächen, simulieren. Aus einer einfach gestalteten Basisschraffur werden daher Erhebungen derart von ihrer Grundausrichtung abgelenkt, dass Schraffurflächen gebildet werden, die den Eindruck von dreidimensionalen Formen oder Körpern vermitteln.

Die WO 2014 005 784 A1 offenbart einen weiteren Fahrzeugreifen mit einer Seitenwandschraffur. Die Seitenwandschraffur ist aus einer Vielzahl von linienförmigen Erhebungen, die eine Kurvenschar zuzuordnen sind, gebildet. Die linienförmigen Erhebungen weisen, im Querschnitt betrachtet, einen zum Reifeninneren hin gekrümmten Konturverlauf und einen in ihrer senkrecht zur Kontur der Seitenwand gemessenen Höhe befindlichen Scheitelpunkt auf. Derartige Erhebungen sollen eine gute Haltbarkeit aufweisen.

Aus der JP 2011 126 335 A ist ein Fahrzeugreifen mit einer Seitenwandschraffur bekannt, welche aus würfelartig aussehenden Elementen gebildet ist. Diese Elemente sind jeweils aus zwei parallelogrammförmigen Schraffurflächen mit Erhebungen und einer glatten Fläche gebildet, wobei die Erhebungen derart orientiert sind, dass die Erhebungen auf der einen parallelogrammförmigen Schraffurfläche gegensinnig zu den Erhebungen auf der anderen parallelogrammförmigen Schraffurfläche verlaufen.

Der Erfindung liegt die Aufgabe zugrunde, einen Fahrzeugreifen mit einer dekorativen Seitenwandschraffur zur Verfügung zu stellen, die Licht- und Schatteneffekte bewirkt, welche besonders gut dafür geeignet sind, konstruktionsbedingte Unebenheiten in den Reifenseitenwänden, insbesondere die durch die Karkasse bedingten Einschnürungen (sidewall indentations), zu kaschieren.

Gelöst wird die gestellte Aufgabe erfindungsgemäß dadurch, dass die Erhebungen in den Schraffurflächen eines Schraffurelementes strahlenförmig von einem zentralen Bereich des Schraffurelementes zu den Elementseiten verlaufen.

Erfindungsgemäß ausgeführte Schraffurbereiche sind einheitlich aus n-Ecken oder deren Teilen gebildet, wobei durch den strahlenförmigen Verlauf der Erhebungen in den Schraffurelementen besondere Licht- und Schatteneffekte erzeugt werden und sich unterschiedliche Reflexionsgrade ergeben, wodurch Unebenheiten in den Reifenseitenwänden besonders gut kaschiert werden. Diesbezüglich spielt auch eine gewisse Rolle, dass die zentralen Bereiche in den einzelnen Schraffurelementen, bei welchen die Erhebungen zusammenlaufen, dunkler erscheinen. Insgesamt vermitteln erfindungsgemäß gestalteten Schraffurbereiche ein einheitlich gestaltetes Dekor.

Bei einer bevorzugten Ausführungsform der Erfindung beträgt die Länge der Elementseiten 10 mm bis 60 mm. Schraffurelemente mit Elementseiten in diesem Bereich weisen ein

Erscheinungsbild auf, dass besonders dafür gut geeignet ist, Unebenheiten in der Reifenseitenwand zu kaschieren.

Die Aufmerksamkeit eines Betrachters wird dann besonders gut auf die strahlenförmig verlaufenden Erhebungen gelenkt, wenn deren Anzahl pro Schraffurfläche fünfzehn bis dreißig beträgt und wenn der gegenseitige Abstand zwischen benachbarten Erhebungen an den Elementseiten 0,5 mm bis 2,5 mm beträgt.

Sind die Schraffurelemente unregelmäßige n-Ecke, so ist es vorteilhaft, wenn die längste Elementseite eine Länge aufweist, die bis zum 2,5-Fachen der Länge der kürzesten Elementseite beträgt.

Bei einer bevorzugten Ausführungsform der Erfindung ist der zentrale Bereich frei von Erhebungen.

Diese trägt dazu bei, besondere optische Effekte mitzugestalten, die den strahlenförmigen Verlauf der Erhebungen betonen.

Bei einer bevorzugten Ausführungsform der Erfindung sind die Schraffurelemente unregelmäßige Fünfecke, die sich besonders dafür eignen, zusätzlich zum strahlenförmigen Erscheinungsbild eine sternähnliche und besonders ästhetische Schraffur zu bilden.

Der Schraffurbereich an der Seitenwand wird üblicherweise zumindest zum Teil nur von Teilbereichen von Schraffurelementen gebildet, je nach der Breite des Schraffurbereiches und je nach der Größe der einzelnen Schraffurflächen in den Schraffurelementen. Dadurch wird die Aufmerksamkeit des Betrachters vorrangig auf die auffallenden zentralen Bereiche der Schraffurelemente und auf die von diesen ausgehenden strahlenförmig verlaufenden Erhebungen gelenkt, was den kaschierenden Effekt der Schraffur unterstützt.

In diesem Zusammenhang ist es von besonderem Vorteil, wenn auf zumindest einer Seitenwand drei vorzugsweise gleich breite Schraffurbereiche ausgebildet sind, deren Mitten um jeweils 120° zueinander versetzt sind. Bevorzugt verläuft dabei jeder Schraffurbereich bezüglich der Reifenachse über einen Zentriwinkel von mindestens 40°. Die in radialer Richtung ermittelte Breite der Schraffurbereiche beträgt 15 mm bis 55 mm. Weitere Merkmale, Vorteile und Einzelheiten der Erfindung werden nun anhand der schematischen Zeichnung, die Ausführungsbeispiele darstellt, näher beschrieben.

### Dabei zeigen

Fig. 1 eine Ansicht eines Abschnittes einer Seitenwand eines Fahrzeugreifens mit einer Ausführungsform der Erfindung,
Fig. 2 eine Draufsicht auf eine Ausführungsform einer erfindungsgemäßen Schraffur und
Fig. 3 einen Querschnitt von Schraffuren bildenden Erhebungen.

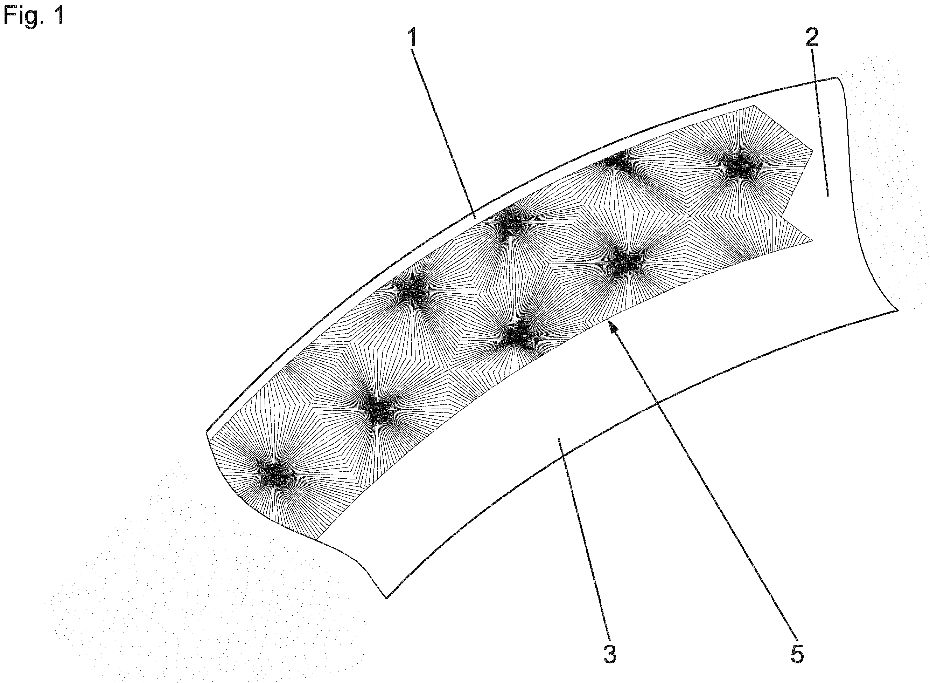

Fig. 1 zeigt schematisch einen Umfangsabschnitt einer Seitenansicht eines Fahrzeugreifens mit einem Laufstreifenauslauf 1, einer Seitenwand 2 und einem äußeren Wulstbereich 3, welcher bei auf einer Felge montiertem Reifen durch die Felge teilweise abgedeckt ist.

Auf der Seitenwand von Fahrzeugreifen sind üblicherweise die vorgeschriebenen Angaben, wie Dimensionsangaben, der Speedindex, der Hersteller, der Verwendungszweck (Sommer-/ Winterreifen) und dergleichen angegeben. Diese Angaben befinden sich auf glatten Flächenbereichen und sind aus erhabenen Elementen im Gummimaterial der Seitenwand ausgebildet. Es verbleibt jedoch einiges an Freifläche auf den Seitenwänden von Fahrzeugreifen für Schraffuren, die einerseits den Kontrast zu den glatten Flächenbereichen in der Seitenwand, auf welchen die erwähnten Schriftzüge angebracht sind, deutlich machen und andererseits etwaige konstruktionsbedingte Unebenheiten an den Reifenseitenwänden kaschieren.

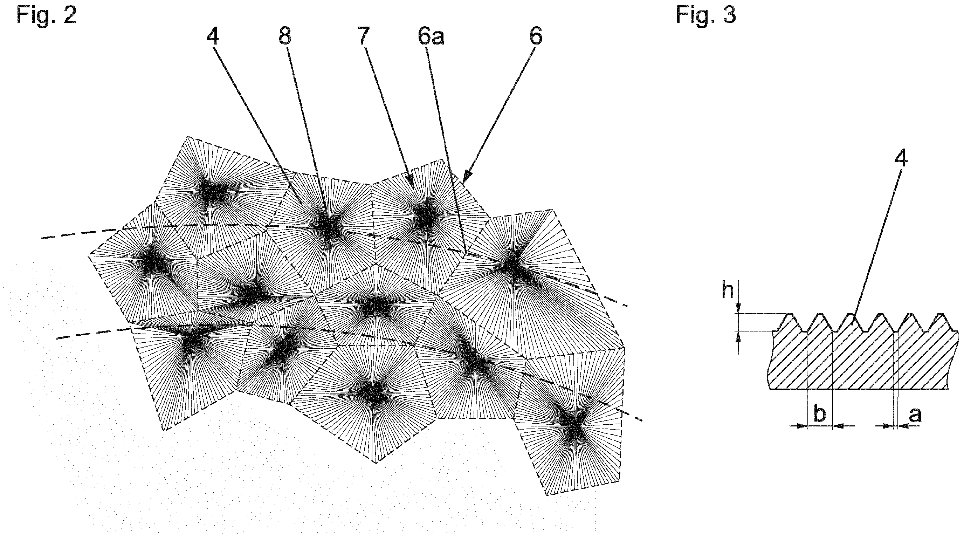

Als Schraffur werden Dekore auf den Seitenwänden von Fahrzeugreifen bezeichnet, die sich jeweils aus einer Vielzahl von Erhebungen zusammensetzen. Fig. 3 zeigt als Ausführungsbeispiel im Querschnitt dreieckförmige Erhebungen 4. Die Höhe h der Erhebungen 4 beträgt 0,2 mm bis 0,8 mm, bei PKW-Reifen üblicherweise 0,3 mm bis 0,5 mm. Die Breite b der Erhebungen 4 an ihrer Basis beträgt ebenfalls 0,2 mm bis 0,8 mm. Auf erfindungsgemäß gestalteten Schraffurflächen weisen vorzugsweise sämtliche Erhebungen 4 übereinstimmende Höhen h und übereinstimmende Breiten b auf, wobei die Erhebungen 4 ihre Höhe und ihre Breite über ihre gesamte Erstreckung vorzugsweise beibehalten. Auf erfindungsgemäß gestalteten Schraffurflächen kann ferner vorgesehen sein, dass sich die Höhe und/oder die Breite der Erhebungen 4 über die Erstreckung der Erhebungen 4 insbesondere kontinuierlich ändern.

Gemäß der Erfindung ist auf der Seitenwand 2 zumindest ein Schraffurbereich 5 ausgebildet, welcher ein Ausschnitt einer Schraffur ist, die sich aus flächigen Schraffurelementen 6 mit äußeren Elementseiten 6a zusammensetzt, welche n-Ecke mit n = 4 bis 6 sind. Die n-Ecke können regelmäßige und gleich große n-Ecke oder unregelmäßige n-Ecke sein, wobei innerhalb einer Schraffur jeweils ausschließlich gleichartige n-Ecke, also jeweils nur Vier- oder nur Fünf- oder nur Sechsecke, vorhanden sind.

Fig. 2 zeigt eine Draufsicht auf eine Ausführungsform einer Schraffur aus unregelmäßigen Fünfecken, wobei gemäß einer bevorzugten Ausführungsform der Erfindung ein Streifen aus dieser Schraffur, wie mit gestrichelten Linien angedeutet, einen Schraffurbereich 5 auf der Seitenwand 2 bildet. Die einzelnen Erhebungen 4, welche geradlinig verlaufen, sind in Fig. 1 und 2 durch Striche versinnbildlicht. Aneinander angrenzende Schraffurelemente 6 weisen eine Elementseite 6a auf, die jeweils zu zwei zueinander benachbart verlaufenden Schraffurelementen 6 gehört. Jedes Schraffurelemet 6 besteht aus fünf Schraffurflächen 7, auf welchen jeweils unabhängig von der jeweiligen Größe und Ausführung der Schraffurfläche 7 die gleiche Anzahl von Erhebungen 4 ausgebildet ist, welche von einem zentralen Bereich 8 jedes Schraffurelementes 6 strahlenförmig zu den Elementseiten 6a verlaufen. An Elementseiten 6a, die zu zwei einander benachbarten Schraffurelementen 6 gehören, stoßen die Erhebungen 4 aus der Schraffurfläche 7 des einen Schraffurelementes 6 auf die Erhebungen 4 aus der Schraffurfläche 7 des benachbarten Schraffurelementes 6. Die in sämtlichen Schraffurflächen 7 gleich große Anzahl der Erhebungen 4 beträgt zwischen Fünfzehn und Dreißig.

Im zentralen Bereich 8 laufen sämtliche Erhebungen 4 zusammen, sodass hier ein lokal sehr begrenzter Bereich frei von Erhebungen 4 ausgebildet ist. In Folge der Unregelmäßigkeit der fünfeckigen Schraffurelemente 6 sind die Schraffurflächen 7 unterschiedlich groß und ihre Elementseiten 6a weisen unterschiedliche Normalabstände zum jeweiligen zentralen Bereich 8 bzw. dem Zentrum der Schraffurelemente 6 auf. Diese Unregelmäßigkeit bewirkt auch, dass die Erhebungen 4 in den Schraffurflächen 7 eines Schraffurelementes 6 meist geringfügig unterschiedliche Winkel miteinander einschließen, sowohl von Schraffurfläche 7 zu Schraffurfläche 7 als auch innerhalb einer Schraffurfläche 7. An den Elementseiten 6a kann daher der gegenseitige Abstand a (Fig. 3) der Erhebungen 4 ebenfalls je nach Ausgestaltung der Schraffurflächen 7 unterschiedlich sein und zwischen 0,5 mm und 2,5 mm variieren. Es gibt auch Schraffurelemente 6, welche zumindest eine Schraffurfläche 7 aufweisen, auf welcher der strahlenförmige Verlauf der Erhebungen 4 regelmäßig ist, sodass der gegenseitige Abstand der Erhebungen 4 an den Elementseiten 6a zumindest im Wesentlichen gleich groß ist. Die Länge der Elementseiten 6a der die n-Ecken bildenden Schraffurelemente 6 beträgt vorzugsweise zwischen 10 mm und 60 mm und kann bei einem Schraffurelement 6 derart variieren, dass die längste Elementseite 6a eine Länge aufweist, die bis zum 2,5-Fachen der Länge der kürzesten Elementseite 6a beträgt.

Der einen Schraffurbereich 5 auf einer Seitenwand bildende Streifen aus der jeweiligen Grundschraffur kann, wie es in Fig. 1 gezeigt ist, derart schmal sein, dass großteils nur Teilbereiche von Schraffurelementen 6 im Schraffurbereich 5 ausgebildet sind. Die in Umfangsrichtung liegenden Ränder der Schraffurbereiche 5 werden vorzugsweise von Elementseiten 6a bzw. von Abschnitten von Elementseiten 6a begrenzt.

Erfindungsgemäß gestaltete Schraffurbereiche 5 auf Seitenwänden 2 bewirken, insbesondere in Folge der strahlenförmig verlaufenden Erhebungen 4 und der zentralen Bereiche in den einzelnen Schraffurelementen 6, Licht- und Schatteneffekte mit besonderer Wirkung und sind daher insbesondere auch dafür gut geeignet, konstruktionsbedingte Unebenheiten in Reifenseitenwänden zu kaschieren.

Auf zumindest einer Seitenwand werden drei vorzugsweise gleich breite Schraffurbereiche 5 ausgebildet, deren Mitten um jeweils etwa 120° zueinander versetzt sind. Jeder Schraffurbereich 5 verläuft bezüglich der Reifenachse über einen Zentriwinkel von mindestens 40°. Die in radialer Richtung ermittelte Breite der Schraffurbereiche 5 beträgt 15 mm bis 55 mm.

### Bezugsziffernliste

- 1 .......................: Laufstreifenauslauf
- 2 .......................: Seitenwand
- 3 .......................: äußerer Wulstbereich
- 4 .......................: Erhebung
- 5 .......................: Schraffurbereich
- 6 .......................: Schraffurelement
- 6a .....................: Elementseite
- 7 .......................: Schraffurfläche
- 8 .......................: zentraler Bereich
- a .......................: Abstand
- b .......................: Breite
- h .......................: Höhe

## Patentansprüche

1. Fahrzeugreifen mit einer dekorativen Seitenwandschraffur aus einer Vielzahl von geradlinig verlaufenden Erhebungen (4), die auf Schraffurflächen (7), die Schraffurelemente (6) bilden, ausgebildet sind,
wobei die Schraffurelemente (6) gleichartige regelmäßige oder unregelmäßige n-Ecke mit n von vier bis sechs sind und mit gemeinsamen äußeren
Elementseiten (6a) unmittelbar aneinander anschließen,
wobei die Anzahl der Erhebungen (4) in sämtlichen Schraffurflächen (7) gleich ist und wobei an gemeinsamen Elementseiten (6a) von Schraffurelementen (6) die Erhebungen (4) aus den betreffenden Schraffurflächen (7) unmittelbar aufeinander stoßen,
**dadurch gekennzeichnet,**
**dass** die Erhebungen (4) in den Schraffurflächen (7) eines Schraffurelementes (6) strahlenförmig von einem zentralen Bereich (8) des Schraffurelementes (6) zu den Elementseiten (6a) verlaufen.

2. Fahrzeugreifen nach Anspruch 1, **dadurch gekennzeichnet, dass** die Länge der Elementseiten (6a) 10 mm bis 60 mm beträgt.

3. Fahrzeugreifen nach Anspruch 1 oder 2, **dadurch gekennzeichnet, dass** die Anzahl der Erhebungen (4) pro Schraffurfläche (7) fünfzehn bis dreißig beträgt.

4. Fahrzeugreifen nach einem der Ansprüche 1 bis 3, **dadurch gekennzeichnet, dass** der gegenseitige Abstand (a) zwischen benachbarten Erhebungen (4) an den Elementseiten (6a) 0,5 mm bis 2,5 mm beträgt.

5. Fahrzeugreifen nach einem der Ansprüche 1 bis 4, **dadurch gekennzeichnet, dass** die Schraffurelemente (6) unregelmäßige n-Ecke sind, wobei die längste Elementseite (6a) eine Länge aufweist, die bis zum 2,5-Fachen der Länge der kürzesten Elementseite (6a) beträgt.

6. Fahrzeugreifen nach einem der Ansprüche 1 bis 5, **dadurch gekennzeichnet, dass** der zentrale Bereich (8) frei von Erhebungen (4) ist.

7. Fahrzeugreifen nach einem der Ansprüche 1 bis 6, **dadurch gekennzeichnet, dass** die Schraffurelemente (6) unregelmäßige Fünfecke sind.

8. Fahrzeugreifen nach einem der Ansprüche 1 bis 7, **dadurch gekennzeichnet, dass** der Schraffurbereich (5) an der Seitenwand (2) zumindest zum Teil nur von Teilbereichen von Schaffurelementen (6) gebildet ist.

9. Fahrzeugreifen nach einem der Ansprüche 1 bis 8, **dadurch gekennzeichnet, dass** auf zumindest einer Seitenwand (2) drei vorzugsweise gleich breite Schraffurbereiche (5) ausgebildet sind, deren Mitten um jeweils etwa 120° zueinander versetzt sind.

10. Fahrzeugreifen nach Anspruch 9, **dadurch gekennzeichnet, dass** jeder Schraffurbereich (5) bezüglich der Reifenachse über einen Zentriwinkel von mindestens 40° verläuft.

11. Fahrzeugreifen nach einem der Ansprüche 1 bis 10, **dadurch gekennzeichnet, dass** die in radialer Richtung ermittelte Breite des Schraffurbereiches (5) 15 mm bis 55 mm beträgt.

## Claims

1. Vehicle tyre with a decorative lateral wall hatching comprising a multiplicity of linearly running elevations (4) which are formed on hatching areas (7) that form hatching elements (6),
wherein the hatching elements (6) are identical regular or irregular n-sided polygons, where n is from four to six, and directly adjoin one another with common outer element sides (6a),
wherein the number of elevations (4) is the same in all of the hatching areas (7) and wherein, at common element sides (6a) of hatching elements (6), the elevations (4) from the corresponding hatching areas (7) directly abut one another,
**characterized**
**in that** the elevations (4) in the hatching areas (7) of a hatching element (6) extend radially from a central region (8) of the hatching element (6) to the element sides (6a).

2. Vehicle tyre according to Claim 1, **characterized in that** the length of the element sides (6a) is 10 mm to 60 mm.

3. Vehicle tyre according to Claim 1 or 2, **characterized in that** the number of elevations (4) per hatching area (7) is fifteen to thirty.

4. Vehicle tyre according to one of Claims 1 to 3, **characterized in that** the mutual spacing (a) between adjacent elevations (4) at the element sides (6a) is 0.5 mm to 2.5 mm.

5. Vehicle tyre according to one of Claims 1 to 4, **characterized in that** the hatching elements (6) are irregular n-sided polygons, wherein the longest element side (6a) has a length that is up to 2.5 times the length of the shortest element side (6a).

6. Vehicle tyre according to one of Claims 1 to 5, **characterized in that** the central region (8) is free from elevations (4).

7. Vehicle tyre according to one of Claims 1 to 6, **characterized in that** the hatching elements (6) are irregular pentagons.

8. Vehicle tyre according to one of Claims 1 to 7, **characterized in that** the hatching region (5) on the sidewall (2) is at least partly formed only by partial regions of hatching elements (6).

9. Vehicle tyre according to one of Claims 1 to 8, **characterized in that**, on at least one sidewall (2), three hatching regions (5), preferably of the same width, are formed, the centres of which are offset in each case by approximately 120° in relation to one another.

10. Vehicle tyre according to Claim 9, **characterized in that** each hatching region (5) extends with respect to the tyre axis over a centre angle of at least 40°.

11. Vehicle tyre according to one of Claims 1 to 10, **characterized in that** the width of the hatching region (5), determined in the radial direction, is 15 mm to 55 mm.

## Revendications

1. Pneumatique de véhicule comportant une paroi latérale décorative hachurée formée d'une pluralité d'élévations rectilignes (4) qui sont formées sur des surfaces hachurées (7) qui forment des éléments hachurés (6),
les éléments hachurés (6) étant des polygones réguliers ou irréguliers à n côtés, avec n allant de quatre à six, et étant directement adjacents les uns aux autres par des côtés d'élément extérieurs communs (6a),
le nombre d'élévations (4) étant le même dans toutes les surfaces hachurées (7) et les élévations (4) desdites surfaces hachurées (7) étant en butée directement les unes sur les autres sur des côtés d'élément communs (6a) d'éléments hachurés (6),
caractérisé en que
les élévations (4) dans les surfaces hachurées (7) d'un élément hachuré (6) s'étendent sous la forme de rayons depuis une région centrale (8) de l'élément hachuré (6) vers les côtés d'élément (6a).

2. Pneumatique de véhicule selon la revendication 1, **caractérisé en ce que** la longueur des côtés d'élément (6a) est de 10 mm à 60 mm.

3. Pneumatique de véhicule selon la revendication 1 ou 2, **caractérisé en ce que** le nombre d'élévations (4) par surface hachurée (7) est de quinze à trente.

4. Pneumatique de véhicule selon l'une des revendications 1 à 3, **caractérisé en ce que** la distance mutuelle (a) entre des élévations adjacentes (4) sur les côtés d'élément (6a) est de 0,5 mm à 2,5 mm.

5. Pneumatique de véhicule selon l'une des revendications 1 à 4, **caractérisé en ce que** les éléments hachurés (6) sont des polygones irréguliers à n côtés, le côté d'élément (6a) le plus long ayant une longueur qui peut aller jusqu'à 2,5 fois la longueur du côté d'élément (6a) le plus court.

6. Pneumatique de véhicule selon l'une des revendications 1 à 5, **caractérisé en ce que** la région centrale (8) est dépourvue d'élévations (4).

7. Pneumatique de véhicule selon l'une des revendications 1 à 6, **caractérisé en ce que** les éléments hachurés (6) sont des pentagones irréguliers.

8. Pneumatique de véhicule selon l'une des revendications 1 à 7, **caractérisé en ce que** la région hachurée (5) sur la paroi latérale (2) n'est formée au moins en partie que par des sous-régions d'éléments hachurés (6).

9. Pneumatique de véhicule selon l'une des revendications 1 à 8, **caractérisé en ce que** trois régions hachurées (5) de préférence de même largeur, dont les centres sont décalés les uns des autres d'environ 120° sont formées sur au moins une paroi latérale (2).

10. Pneumatique de véhicule selon la revendication 9, **caractérisé en ce que** chaque région hachurée (5) s'étend avec un angle au centre d'au moins 40° par rapport à l'axe du pneumatique.

11. Pneumatique de véhicule selon l'une des revendications 1 à 10, **caractérisé en ce que** la largeur de la région hachurée (5) définie dans une direction radiale est de 15 mm à 55 mm.
